# EUROPÄISCHE PATENTSCHRIFT

(11) **EP 2 622 417 B1**
(45) Veröffentlichungstag und Bekanntmachung des Hinweises auf die Patenterteilung: **22.01.2020**
(21) Anmeldenummer: 11743833.3
(22) Anmeldetag: 12.08.2011
(51) Int. Cl.: G05B 19/042, G05B 9/02, G01L 7/00

(54) **RECOVER-VERFAHREN FÜR EIN GERÄT MIT EINEM ANALOGEN STROMAUSGANG ZUR AUSGABE EINES MESSWERTES ODER EINES STELLWERTES**
RECOVERY METHOD FOR A DEVICE HAVING AN ANALOGUE CURRENT OUTPUT FOR OUTPUTTING A MEASURED VALUE OR A MANIPULATED VARIABLE
PROCÉDÉ DE RÉCUPÉRATION DESTINÉ À UN APPAREIL COMPORTANT UNE SORTIE DE COURANT ANALOGIQUE POUR L'ÉMISSION D'UNE VALEUR DE MESURE OU D'UNE VALEUR DE RÉGLAGE

(30) Priorität: 30.09.2010 DE 102010041731
(43) Veröffentlichungstag der Anmeldung: 07.08.2013
(73) Patentinhaber: Endress+Hauser Wetzer GmbH+Co. KG, 87484 Nesselwang (DE)
(72) Erfinder: LUGLI, Roberto, I-20090 Segrate (IT); KORN, Michael, 87616 Marktoberdorf (DE)
(74) Vertreter: Andres, Angelika Maria
(86) Internationale Anmeldenummer: PCT/EP2011/063959
(87) Internationale Veröffentlichungsnummer: WO 2012/041593

(56) Entgegenhaltungen:
- EP-A2- 1 860 513
- WO-A1-2009/138315
- DE-A1-102008 001 832
- DE-A1-102008 036 552
- US-A1- 2005 030 185

## Beschreibung

Die vorliegende Erfindung betrifft ein Verfahren zum Betreiben eines Gerätes, das einen analogen Stromausgang zur Ausgabe eines einem Messwert oder einem Stellwert des Gerätes entsprechenden Stromwertes und ein dem Stromausgang zugeordnetes Strom-Stellglied, das in Abhängigkeit von einem, in dem Gerät bereitgestellten Strom-Sollwert eine Einstellung des Stromwertes an dem Stromausgang vornimmt, aufweist. Der einen Messwert oder Stellwert darstellende Stromwert liegt dabei innerhalb eines Bereiches von einem unteren Strom-Grenzwert bis zu einem oberen Strom-Grenzwert. Ferner wird in einem Normalbetrieb des Gerätes der Strom-Sollwert entsprechend einem über den analogen Stromausgang auszugebenden Messwert oder Stellwert bereitgestellt.

In der Industrie ist weit verbreitet, Messwerte von Messgeräten, die an eine separat ausgebildete, übergeordnete Steuerungseinheit zu übermitteln sind, sowie Stellwerte einer übergeordneten Steuerungseinheit, die von dieser an ein entsprechendes Stellgerät bzw. Aktor (zum Beispiel ein Ventil, eine Pumpe, etc.) zu übermitteln sind, über eine elektrische Stromschleife zu übermitteln. Hierbei entspricht ein in der Stromschleife eingestellter elektrischer Strom dem jeweiligen Wert des zu übermittelnden Messwertes beziehungsweise Stellwertes. Der einen Messewert oder Stellwert darstellende Stromwert liegt dabei in der Regel innerhalb eines Bereiches von einem unteren Strom-Grenzwert bis zu einem oberen Strom-Grenzwert. Weit verbreitet ist der 4-20 mA Standard (mA: Milliampere), bei dem der untere Strom-Grenzwert 4 mA und der obere StromGrenzwert 20 mA entspricht. Während Stromwerte, die in dem Strombereich von dem unteren Strom-Grenzwert (4 mA) bis zu dem oberen Strom-Grenzwert (20 mA) liegen (wobei der Strombereich aufgrund von Driften und/oder Ungenauigkeiten auch etwas größer gewählt werden kann), zur Darstellung eines Messwertes oder Stellwertes dienen, werden Stromwerte, die außerhalb dieses Strombereiches liegen (beispielsweise ein Stromwert von weniger als 3,5 mA oder von mehr als 21 mA) häufig zur Signalisierung eines Fehlers oder Alarmes eingesetzt (nachfolgend: Alarmmeldung).

Geräte mit einem analogen Stromausgang werden in der Regel über den analogen Stromausgang an eine 2-Leiter-Stromschleife angeschlossen. Das jeweilige Gerät wirkt dabei in der Stromschleife als aktive Last, die den Stromwert in der Stromschleife entsprechend dem zu übermittelnden Messwert oder Stellwert ändert. Um den Stromwert durch das Gerät in dem Strombereich von dem unteren Strom-Grenzwert bis zu dem oberen Strom-Grenzwert einstellen zu können, ist in der Stromschleife eine Mindestspannung erforderlich. Ist beispielsweise die Spannung in der Stromschleife nicht ausreichend hoch, so kann dies dazu führen, das der tatsächlich durch das Gerät eingestellte Stromwert niedriger als ein dem Messwert beziehungsweise Stellwert entsprechender Strom-Sollwert ist. In diesem Fall wird folglich über die Stromschleife ein falscher Messwert beziehungsweise Stellwert übermittelt. Problematisch dabei ist, dass dieser Fehler für den Empfänger des übermittelten Messwertes beziehungsweise Stellwertes nicht erkennbar ist. Besonders problematisch ist der Fall, in dem ein Gerät eine Alarmmelduna durch Einstellen eines Stromwertes oberhalb des oberen Strom-Grenzwertes übermitteln möchte, um beispielsweise einen internen Fehler, wie beispielsweise einen Sensorausfall, an eine übergeordnete Steuerungseinheit zu melden. Ist in diesem Fall die Spannung in der Stromschleife nicht ausreichend hoch, so kann beispielsweise nur ein Stromwert in dem Strombereich von dem unteren Strom-Grenzwert bis zu dem oberen Strom-Grenzwert eingestellt werden. Dementsprechend kann die Alarmmeldung nicht übermittelt werden und ein Empfänger geht weiterhin davon aus, dass über die Stromschleife ein korrekter Messwert beziehungsweise Stellwert übermittelt wird.

Aus der Druckschrift WO 2009/138315 A1 ist ein Messgerät mit einer Mess- und Betriebselektronik bekannt, durch die überwachbar ist, ob der tatsächlich an dem Stromausgang eingestellte Stromwert einem Strom-Sollwert entspricht. Wird dabei ein Fehler oder Defekt festgestellt, so kann unter anderem ein Fehlerstrom in der Stromschleife eingestellt werden, um diesen Fehler an einen entsprechenden Empfänger zu signalisieren. Dieser Fehlerstrom wird beispielsweise dann eingestellt, wenn die Spannungsversorgung in einer Stromschleife, an der das Messgerät an-geschlossen ist, nur vorübergehend unzureichend ist. In diesem Fehler-Zustand kann ein Messgerät keinen Messwert mehr über die Stromschleife übermitteln. Dies wird erst dann wieder ermöglicht, wenn das Messgerät derart zurückgesetzt wird, dass es wieder einen Stromwert entsprechend einem auszugebenden Messwert einstellt und wenn gegebenenfalls zusätzlich die Ursache für die mangelnde Spannungsversorgung beseitigt ist.

Dementsprechend besteht die Aufgabe der vorliegenden Erfindung darin, ein Verfahren zum Betreiben eines Gerätes bereitzustellen, durch das einerseits zuverlässig feststellbar ist, falls in dem Gerät ein dem auszugebenden Messwert oder Stell-wert entsprechend hoher Stromwert an dem analogen Stromausgang nicht einstell-bar ist, durch das andererseits aber ein unnötiger Ausfall des Gerätes vermieden wird. DE102008001832 beschreibt ein Messgerat zur Überwachung eines Messsignals.

Die Aufgabe wird durch ein Verfahren zum Betreiben eines Gerätes gemäß Anspruch 1 sowie durch ein Gerät gemäß Anspruch 12 gelöst. Vorteilhafte Weiterbildungen der Erfindung sind in den Unteransprüchen angegeben.

Gemäß der vorliegenden Erfindung wird ein Verfahren zum Betreiben eines Gerätes bereitgestellt, das einen analogen Stromausgang zur Ausgabe eines einem Messwert oder einem Stellwert des Gerätes entsprechenden Stromwertes, und ein dem Stromausgang zugeordnetes Strom-Stellglied, das in Anhängigkeit von einem, in dem Gerät bereitgestellten Strom-Sollwert eine Einstellung des Stromwertes an dem Stromausgang vornimmt, aufweist. Dabei liegt der einen Messwert beziehungsweise einen Stellwert darstellende Stromwert innerhalb eines Bereichs von einem unteren Strom-Grenzwert bis zu einem oberen Strom-Grenzwert. In einem Normalbetrieb des Gerätes wird der Strom-Sollwert entsprechend einem über den analogen Stromausgang auszugebenden Messwert beziehungsweise Stellwert bereitgestellt. Das Verfahren weist dabei nachfolgende, in dem Gerät durchgeführte Schritte auf:
A) Überwachen in dem Gerät im Normalbetrieb, ob durch das Strom-Stellglied ein dem Strom-Sollwert entsprechend hoher Stromwert an dem Stromausgang eingestellt wird;
B) Bereitstellen eines Niedrig-Strom-Sollwertes unterhalb des unteren Strom-Grenzwertes, falls der Schritt des Überwachens im Normalbetrieb ergibt, dass durch das Strom-Stellglied ein dem Strom-Sollwert entsprechend hoher Stromwert nicht einstellbar ist; und
C) Anschließendes Überprüfen der Stromeinstellungs-Funktionsfähigkeit durch Bereitstellen eines Hoch-Strom-Sollwertes oberhalb des oberen Strom-Grenzwertes und durch Überwachen in dem Gerät in dem Hoch-Stromwert-Betrieb ob durch das Strom-Stellglied ein dem Hoch-Strom-Sollwert entsprechend hoher Stromwert an dem Stromausgang einstellbar ist.

Durch den Schritt des Überwachens (Schritt A)) kann zuverlässig erfasst werden, falls aufgrund einer unzureichenden Spannungsversorgung in der Stromschleife ein dem Strom-Sollwert entsprechend hoher Stromwert nicht durch das Strom-Stellglied einstellbar ist. Indem bei Feststellen solch eines Zustands ein Stromwert unterhalb des unteren Strom-Grenzwertes eingestellt wird (vgl. Schritt B)), kann die Spannungsversorgung des Gerätes, falls dieses gleichzeitig über die Stromschleife mit elektrischer Leistung versorgt wird, stabilisiert werden. Denn je niedriger der Stromwert innerhalb der Stromschleife ist, desto niedriger ist auch der Spannungsabfall (und der Leistungsabfall) an Widerständen, die außerhalb des Gerätes an der Stromschleife hängen. Folglich kann bei niedrigen Stromwerten in der Regel eine ausreichende Versorgung des Gerätes mit elektrischer Leistung bereitgestellt und damit ein Geräteabsturz verhindert werden. Weiterhin kann durch die Einstellung eines Stromwertes unterhalb des unteren Strom-Grenzwertes eine Alarmmeldung gebildet werden, um einen Fehler in dem Gerät, insbesondere eine unzureichende Spannungsversorgung in der Stromschleife, zu signalisieren. Die Konfiguration derart, dass ein Stromwert unterhalb des unteren Strom-Grenzwertes gleichzeitig eine Alarmmeldung bildet, ist vorteilhaft, da ein niedriger Stromwert selbst bei einer unzureichenden Spannungsversorgung einstellbar ist und damit sicher eine Alarmmeldung übermittelt werden kann. Wird das Gerät beispielsweise durch ein Messgerät gebildet, so kann eine, mit dem Messgerät über die Stromschleife in Verbindung stehende übergeordnete Steuerungseinheit anhand der Alarmmeldung erkennen, dass in dem Messgerät ein Fehler aufgetreten ist. In entsprechender Weise kann auch in dem Fall, dass das Gerät durch eine übergeordnete Steuerungseinheit gebildet wird, das zugehörige, mit der Steuerungseinheit über die Stromschleife in Verbindung stehende Stellgerät erkennen, dass in der Steuerungseinheit ein Fehler aufgetreten ist. Gegebenenfalls kann das Stellgerät in eine, für solche Fälle vorgesehene Default-Betriebsweise (bzw. Not-Betriebsweise) umschalten.

Oftmals ist die Spannungsversorgung in der Stromschleife nur vorübergehend unzureichend. Beispielsweise kann eine, an der Stromschleife angeschlossene Stromversorgungseinheit für eine begrenzte Anzahl von Verbrauchern ausgelegt sein. Problematisch ist dann, wenn vorübergehend ein weiterer Verbraucher an der Stromschleife angeschlossen wird. Dies führt zu einem zusätzlichen Spannungsabfall an dem weiteren Verbraucher, so dass in Folge dessen für das Gerät eine Spannunasversorauna in der Stromschleife unzureichend sein kann. Sobald der weitere Verbraucher von der Stromschleife getrennt wird, ist die Spannungsversorgung wieder ausreichend und ein Weiterbetrieb des Gerätes im Normalbetrieb wäre dann wieder möglich. Wird beispielsweise an eine Stromschleife, über die ein 4-20 mA Stromsignal von einem Gerät übertragen wird, ein Handbediengerät (z.B. ein HART®-Handheld) zum Parametrieren des Gerätes angeschlossen, so wird in der Regel damit gleichzeitig ein relativ hoher Kommunikationswiderstand (beispielsweise von 500 Ω) in die Stromschleife eingebracht. Dies kann zu einer unzureichenden Spannungsversorgung des an der Stromschleife angeschlossenen Gerätes führen, so dass durch das Strom-Stellglied des Gerätes kein ausreichend hoher Stromwert entsprechend einem Strom-Sollwert mehr in der Stromschleife einstellbar ist. Wird das Handbediengerät nach Abschluss des Parametriervorganges wieder von der Stromschleife getrennt, ist in der Regel auch die Spannungsversorgung wieder ausreichend. Daneben gibt es weitere, in der Praxis relevante Fälle, in denen in dem Gerät nur vorübergehend ein dem Strom-Sollwert entsprechend hoher Stromwert an dem analogen Stromausgang nicht einstellbar ist.

Indem gemäß der vorliegenden Erfindung nach Einstellen eines Stromwertes unterhalb des unteren Strom-Grenzwertes die Stromeinstellungs-Funktionsfähigkeit überprüft wird (vgl. Schritt C)), kann festgestellt werden, ob eine mangelnde Spannungsversorgung in der Stromschleife nur vorübergehend aufgetreten ist oder ob der Fehler dauerhaft vorliegt. Im Rahmen dieser Überprüfung wird getestet, ob durch das Strom-Stellglied ein Stromwert oberhalb des oberen Grenzwertes einstellbar ist. Ist dies der Fall, so kann davon ausgegangen werden, dass auch Stromwerte innerhalb des Strombereichs zwischen dem unteren Grenzwert und dem oberen Grenzwert entsprechend einem auszugebenden Messwert oder Stellwert einstellbar sind. Dementsprechend kann durch diesen Schritt des Überprüfens (Schritt C)) festgestellt werden, ob es tatsächlich erforderlich ist, das Gerät in einem Fehlerzustand, in dem es einen Stromwert unterhalb des unteren Grenzwertes ausgibt, dauerhaft zu halten oder ob das Gerät wieder in einem Normalbetrieb, in dem es einen Stromwert entsprechend einem auszugebenden Messwert oder Stellwert einstellt, betrieben werden kann. Auf diese Weise kann ein unnötiger Ausfall des Gerätes, insbesondere ein unnötig langer Ausfall, vermieden werden.

Die vorliegende Erfindung ist insbesondere bei einem Messgerät, das über den analogen Stromausgang einen Messwert (durch Einstellen eines entsprechenden Stromwertes) übermittelt, vorteilhaft. Solche Messgeräte sind häufig als 2-Leiter-Geräte (2L-Geräte) ausgebildet, wobei in diesem Fall der analoge Stromausgang des Gerätes einen elektrischen Anschluss des Gerätes an eine 2-Leiter-Stromschleife bildet. Ein 2-Leiter-Gerät wird über die 2-Leiter-Stromschleife gleichzeitig mit elektrischer Leistung versorgt. Bei 4-Leiter-Geräten hingegen erfolgt die Versorgung des Gerätes mit elektrischer Leistung über eine separate Stromschleife. Bei 2-Leiter-Geräten ist ein Zustand, in dem die Spannungsversorgung in der 2-Leiter-Stromschleife unzureichend ist, besonders kritisch, da eine mangelnde Spannungsversorgung des Gerätes zu einem Geräteabsturz führen kann. Ein frühzeitiger Hinweis auf eine mangelnde Spannungsversorgung des 2-Leiter-Gerätes ist, dass das 2-Leiter-Gerät einen Stromwert entsprechend einem Messwert oder Stellwert nicht mehr einstellen kann. Indem gemäß der vorliegenden Erfindung in solch einem Fall der Stromwert unterhalb des unteren Strom-Grenzwertes eingestellt wird, werden die Spannungsversorgung des Gerätes stabilisiert und das Risiko eines Geräteabsturzes reduziert.

Grundsätzlich kann das Gerät aber auch durch ein (als 2-Leiter-Gerät oder als 4-Leiter-Gerät) ausgebildetes Stellgerät gebildet werden, das beispielsweise ein Rückkopplungssignal (entsprechend einem von einer übergeordneten Steuerungseinheit erhaltenen Stellwert) an dem analogen Stromausgang einstellt. Weiterhin kann das Gerät auch durch einen Messumformer gebildet werden, der beispielsweise einen Messwert von einem Gerät als Eingangssignal erhält, diesen bearbeitet und über den analogen Stromausgang wieder einen (bearbeiteten) Messwert ausgibt. In die in dem Messumformer durchgeführte Bearbeitung können gegebenenfalls auch noch Messwerte und/oder Stellwerte von weiteren Geräten eingehen. Weiterhin kann das Gerät auch durch eine übergeordnete Steuerungseinheit, insbesondere durch ein Regelungsgerät, gebildet werden, die/das einen analogen Stromausgang zur Ausgabe eines analogen Stellwertes aufweist. Daneben kann die übergeordnete Steuerungseinheit auch noch analoge und/oder digitale Eingänge sowie auch noch weitere analoge und/oder digitale Ausgänge aufweisen.

Wie in dem Fachgebiet bekannt ist, kann das über den analogen Stromausgang ausgegebene, analoge Stromsignal zusätzlich durch ein digitales Stromsignal (zum Beispiel ein digitales Stromsignal gemäß dem HART®-Standard) überlagert sein. Das Strom-Stellglied kann insbesondere durch eine Schaltung, wie beispielsweise einen Transistor, gebildet werden, durch die/den ein Stromwert an dem analogen Stromausgang einstellbar ist. Der Strom-Sollwert kann beispielsweise durch eine Spannung, die proportional zu dem einzustellenden Strom ist, bereitgestellt werden. Dabei ist nicht zwingend, dass der Strom-Sollwert dem Strom-Stellglied direkt zugeführt wird. Vielmehr kann, wie unterhalb erläutert wird, aus dem Strom-Sollwert und gegebenenfalls weiteren Größen, wie beispielsweise einem tatsächlich an dem analogen Stromausgang eingestellten Stromwert, eine Strom-Stellgröße bestimmt werden, die dann dem Strom-Stellglied direkt zugeführt wird.

Der Schritt des Überprüfens der Stromeinstellungs-Funktionsfähigkeit kann auf unterschiedliche Weise erfolgen. Dabei ist nicht zwingend erforderlich, dass der tatsächlich eingestellte Stromwert und der Strom-Sollwert direkt miteinander verglichen werden. Alternativ kann beispielsweise, wie unterhalb in Bezug auf Weiterbildungen erläutert wird, anhand einer, dem Strom-Stellglied zugeführten Strom-Stellgröße festgestellt werden, ob die Stromeinstellungs-Funktionsfähigkeit gegeben ist oder nicht.

Gemäß der vorliegenden Erfindung werden die Schritte des Überwachens (Schritt A)), des Bereitstellens (Schritt B)) sowie des anschließenden Überprüfens (Schritt C)) in dem Gerät ausgeführt. Die Schritte können dabei durch Hardware und/oder durch Software ausgeführt werden, wobei unterschiedliche Aufteilungen möglich sind. Weiterhin kann die Bearbeitung von Werten und/oder Signalen analog und/oder digital erfolgen, wobei unterschiedliche Aufteilungen möglich sind. Der auszugebende Messwert beziehunasweise Stellwert ist insbesondere ein in einer Steuereinheit des Gerätes bestimmter Wert, wobei durch die Steuereinheit ein diesem Wert entsprechender Strom-Sollwert bereitgestellt wird.

Der Bereich von dem unteren Strom-Grenzwert bis zu dem oberen Strom-Grenzwert kann unterschiedlich gewählt werden. Wie oberhalb erläutert wird, ist ein Bereich von 4 mA bis 20 mA üblich. Teilweise wird beispielsweise auch ein Bereich von 0 mA bis 20 mA gewählt. Der untere Strom-Grenzwert entspricht dann insbesondere dem niedrigsten, darzustellenden Messwert beziehungsweise Stellwert und der obere Strom-Grenzwert entspricht insbesondere dem höchsten, darzustellenden Messwert beziehungsweise Stellwert. Als "Normalbetrieb" des Gerätes wird in dem vorliegendem Zusammenhang eine Betriebsweise des Gerätes bezeichnet, in der der Strom-Sollwert entsprechend einem über den analogen Stromausgang auszugebenden Messwert beziehungsweise Stellwert bereitgestellt wird. Ein Betriebszustand, in dem ein Niedrig-Strom-Sollwert oder ein Hoch-Strom-Sollwert bereitgestellt wird, wird in dem vorliegenden Zusammenhang nicht als Normalbetrieb bezeichnet.

Gemäß einer Weiterbildung wird bei dem Schritt des Überprüfens überprüft, ob durch das Strom-Stellglied ein dem Hoch-Strom-Sollwert entsprechend hoher Stromwert über eine erste vorbestimmte Zeitdauer hinweg einstellbar ist. Auf diese Weise kann überprüft werden, ob ein Stromwert oberhalb des oberen Strom-Grenzwertes stabil (das heißt über die erste vorbestimmte Zeitdauer hinweg) gehalten werden kann. Dadurch wird insbesondere die Stabilität der Spannungsversorgung innerhalb der Stromschleife überprüft. Insbesondere wird während der Dauer des Schrittes des Überprüfens (Schritt C)) auch der Strom-Sollwert über die erste vorbestimmte Zeitdauer hinweg durch den Hoch-Strom-Sollwert gebildet.

Wie oberhalb erläutert wird, ist in dem Fall, in dem der Schritt des Überprüfens der Stromeinstellungs-Funktionsfähigkeit (Schritt C)) ergibt, dass eine ausreichende Spannungsversorgung in der Stromschleife gegeben ist, ein Normalbetrieb des Gerätes wieder möglich. Um die Ausfallzeiten des Gerätes möglichst niedrig zu halten, ist gemäß einer Weiterbildung vorgesehen, dass in dem Fall, dass der Schritt des Überprüfens das Vorliegen der Stromeinstellungs-Funktionsfähigkeit ergibt, anschließend in dem Gerät ein Strom-Sollwert entsprechend einem über den analogen Stromausgang auszugebenden Messwert beziehungsweise Stellwert bereitgestellt wird. Das Gerät wird also wieder im Normalbetrieb betrieben. Dabei wird von einem "Vorliegen der Stromeinstellungs-Funktionsfähigkeit" ausgegangen, wenn bei dem Schritt des Überprüfens (Schritt C)) ein dem Hoch-Strom-Sollwert entsprechend hoher Stromwert an dem analogen Stromausgang, insbesondere über die erste vorbestimmte Zeitdauer hinweg, eingestellt werden konnte.

Auf der anderen Seite soll in einem Fall, in dem eine Stromeinstellungs-Funktionsfähigkeit in dem Gerät nicht gegeben ist, einem Empfänger der über den analogen Stromausgang ausgegebenen Stromsignale signalisiert werden, dass durch das Gerät kein gültiger Messwert oder Stellwert übermittelt wird und dass in dem Gerät ein Fehler aufgetreten ist. Dementsprechend ist gemäß einer Weiterbildung vorgesehen, das in dem Fall, dass der Schritt des Überprüfens nicht das Vorliegen der Stromeinstellung-Funktionsfähigkeit ergibt, anschließend in dem Gerät ein Niedrig-Strom-Sollwert unterhalb des unteren Strom-Grenzwertes bereitgestellt wird. Unter einem "nicht Vorliegen beziehungsweise Fehlen der Stromeinstellungs-Funktionsfähigkeit" wird dabei verstanden, das bei dem Schritt des Überprüfens (Schritt C)) ein dem Hoch-Strom-Sollwert entsprechend hoher Stromwert nicht oder (im Falle der oberhalb erläuterten Weiterbildung) nicht über die erste vorbestimmte Zeitdauer hinweg eingestellt werden konnte. Der Niedrig-Strom-Sollwert kann dabei insbesondere dem bei dem Schritt des Bereitstellens (Schritt B)) bereitgestellten Niedrig-Strom-Sollwert entsprechen. Er kann aber auch von diesem abweichen. Insbesondere wird durch die Einstellung eines dem Niedrig-Strom-Sollwert entsprechenden Stromwertes an dem analogen Stromausgang einem an der Stromschleife angeschlossenen Empfänger, insbesondere einer übergeordneten Steuerungseinheit, eine Alarmmeldung übermittelt.

Gemäß einer Weiterbildung ist vorgesehen, dass, nachdem der Niedrig-Strom-Sollwert nach dem Schritt des Überprüfens der Stromeinstellungs-Funktionsfähigkeit (Schritt C)) bereitgestellt wurde, direkt oder nach Ablauf einer vorbestimmten Zeitdauer erneut der Schritt des Überprüfens der Stromeinstellungs-Funktionsfähigkeit (Schritt C)) durchgeführt wird und damit die Schleife erneut durchlaufen wird. Ab der zweiten Iteration wird der Schritt des Bereitstellens des Niedrig-Strom-Sollwertes im Vergleich zu Schritt B) jedoch derart abgewandelt, dass der Niedrig-Strom-Sollwert unterhalb des unteren Strom-Grenzwertes bereitgestellt wird, falls der Schritt des Überwachens in dem Hoch-Stromwert-Betrieb ergibt, dass durch das Strom-Stellglied ein dem Hoch-Strom-Sollwert entsprechend hoher Stromwert nicht einstellbar ist. Bei dieser Weiterbildung ist demensprechend vorgesehen, das in einem Fall, in dem die Stromeinstellungs-Funktionsfähigkeit dauerhaft nicht gegeben ist, die Schritte des Bereitstellens eines Niedrig-Strom-Sollwertes (Schritt B)) und des Überprüfens der Stromeinstellungs-Funktionsfähigkeit (Schritt C)) wechselweise durchgeführt werden. Dadurch ist für einen an der Stromschleife angeschlossenen Empfänger des über den analogen Stromausgang ausgegebenen Stromsignals anhand des zeitlich stark schwankenden Stromwertes erkennbar, dass die Stromeinstellungs-Funktionsfähigkeit in dem Gerät dauerhaft nicht gegeben ist. Dabei kann ein an der Stromschleife angeschlossener Empfänger des über den analogen Stromausgang ausgegebenen Stromsignals derart eingerichtet sein, dass er, nachdem ein Stromwert unterhalb des unteren Strom-Grenzwertes ausgegeben wurde, einen anschließend über den unteren Strom-Grenzwert ansteigenden Stromwert nicht direkt als Messwert oder Stellwert interpretiert. Vorzugsweise wartet der Empfänger zunächst ab, ob ein Stromwert oberhalb des oberen Strom-Grenzwertes, gegebenenfalls über die erste vorbestimmte Zeitdauer hinweg, eingestellt wurde und interpretiert erst einen anschließend in dem Bereich zwischen dem unteren Strom-Grenzwert und dem oberen Strom-Grenzwert eingestellten Stromwert als Messwert beziehungsweise Stellwert. Auf diese Weise kann sichergestellt werden, dass ein, während des Schrittes des Überprüfens der Stromeinstellungs-Funktionsfähigkeit (Schritt C)) eingestellter Stromwert nicht fälschlicherweise als Messwert beziehungsweise Stellwert interpretiert wird.

Gemäß einer Weiterbildung wird nach dem Schritt des Bereitstellens eines Niedrig-Strom-Sollwertes eine zweite, vorbestimmte Zeitdauer abgewartet, bevor der Schritt des Überprüfens der Stromeinstellungs-Funktionsfähigkeit (Schritt C)) begonnen wird. Auf diese Weise kann sichergestellt werden, dass ein an der Stromschleife angeschlossener Empfänger die durch Einstellen eines Stromwertes unterhalb des unteren Strom-Grenzwertes übermittelte Alarmmeldung registriert. Weiterhin kann sich das Gerät während dieser Zeitdauer stabilisieren und erforderliche Schritte (beispielsweise zum Sichern der Daten in dem Gerät) ausführen. Die zweite vorbestimmte Zeitdauer kann dabei gleich lang wie die oberhalb erwähnte erste Vorbestimmte Zeitdauer sein, sie kann aber auch von dieser abweichen. Das Abwarten der zweiten, vorbestimmten Zeitdauer erfolgt insbesondere bei dem ersten Durchlauf der Schritte des Bereitstellens eines Niedrig-Strom-Sollwertes (Schritt B)) und des Überprüfens der Stromeinstellungs-Funktionsfähigkeit (Schritt C)). Sind, wie oberhalb erläutert wird, bei einem dauerhaften Ausbleiben der Stromeinstellungs-Funktionsfähigkeit mehrere Iterationen der Schritte B) (gegebenenfalls abgewandelt, wie oberhalb erläutert) und Schritt C) vorgesehen, so kann die zweite, vorbestimmte Zeitdauer jedes Mal vor Durchführung des Schrittes C) (Überprüfen der Stromeinstellungs-Funktionsfähigkeit) durchgeführt werden.

Gemäß einer Weiterbildung wird während der zweiten, vorbestimmten Zeitdauer der auszugebende Messwert beziehungsweise Stellwert in dem Gerät gespeichert. Dadurch wird sichergestellt, dass keine Messwerte beziehungsweise Stellwerte verloren gehen. Ist die Stromeinstellungs-Funktionsfähigkeit über einen längeren Zeitraum nicht gegeben, so kann vorgesehen sein, dass eine Folge von Messwerten beziehungsweise Stellwerten in dem Gerät gespeichert wird.

Gemäß einer Weiterbildung wird während der zweiten, vorbestimmten Zeitdauer das Gerät auf das Vorliegen eines internen Fehlers überprüft. Liegt die Ursache für die ausgegebene Alarmmeldung in einem internen Fehler und nicht an einer unzureichenden Spannungsversorgung in der Stromschleife, so ist in der Regel tatsächlich eine Wartung oder Reparatur des Gerätes durchzuführen. Deshalb ist in diesem Fall sinnvoll, dass der Schritt des Überprüfens der Stromeinstellungs-Funktionsfähigkeit nicht durchgeführt wird und das Gerät nicht in den Normalbetrieb zurückgesetzt wird, sondern dauerhaft eine Alarmmeldung ausgegeben wird. Demensprechend ist gemäß einer Weiterbildung vorgesehen, dass der Schritt des Überprüfens der Stromeinstellungs-Funktionsfähigkeit (Schritt C)) nur dann durchgeführt wird, wenn der Schritt des Überprüfens des Gerätes ergeben hat, dass kein interner Fehler in dem Gerät vorliegt.

Gemäß einer Weiterbildung wird der einen Messwert beziehungsweise einen Stellwert darstellende Stromwert durch ein Stromsignal gemäß dem 4-20 mA Standard gebildet. Wie oberhalb erläutert wird, kann alternativ aber auch ein anderer Strombereich, wie beispielsweise ein Bereich von 0 bis 20 mA, vorgesehen sein.

Gemäß einer Weiterbildung wird in dem Gerät der Strom-Sollwert mit einem an dem analogen Stromausaana (tatsächlich) einaestellten Stromwert veralichen und basierend darauf wird eine, an das Strom-Stellglied ausgegebene Strom-Stellgröße bestimmt. Dieser Vergleich kann insbesondere mit einem in dem Gerät vorgesehenen Operationsverstärker durchgeführt werden. Insbesondere wird eine Differenz zwischen dem Strom-Sollwert und dem tatsächlich eingestellten Stromwert gebildet und basierend auf dem erhaltenen Differenzwert wird die Strom-Stellgröße bestimmt. Dies kann beispielsweise dadurch realisiert werden, das an einen Eingang (nicht-invertierender Eingang) des Operationsverstärkers der Strom-Sollwert und an den anderen Eingang (invertierender Eingang) des Operationsverstärkers der tatsächlich eingestellte Stromwert gegeben werden. Das Ausgangssignal des Operationsverstärkers kann dann als Strom-Stellgröße verwendet werden.

Gemäß einer Weiterbildung weist das Gerät ein Vergleichsglied auf, durch das bestimmt wird, ob die Strom-Stellgröße einen vorbestimmten Grenzwert überschreitet, und durch das bei Überschreiten des Grenzwertes ein entsprechendes Alarmsignal an eine Steuereinheit des Gerätes ausgegeben wird. Das Vergleichsglied kann insbesondere durch einen Komparator gebildet werden. Wie dem Fachmann bekannt ist, kann das Vergleichsglied insbesondere durch einen entsprechend ausgebildeten und verschalteten Operationsverstärker gebildet werden. Eine Steuereinheit des Gerätes, an die das Alarmsignal des Vergleichsgliedes ausgegeben wird, kann insbesondere durch eine CPU (engl. Ausdruck: central processing unit; deutscher Ausdruck: Zentrale Prozessoreinheit), einen Mikroprozessor, etc. gebildet werden. Das Überschreiten eines vorbestimmten Grenzwertes durch die Strom-Stellgröße kann gut als Indikator dafür, dass durch das Strom-Stellglied ein dem Strom-Sollwert entsprechend hoher Stromwert nicht einstellbar ist, herangezogen werden. Denn die Strom-Stellgröße nimmt insbesondere dann einen hohen Wert ein, wenn der tatsächlich eingestellte Stromwert den Strom-Sollwert nicht, insbesondere nicht über einen längeren Zeitraum, erreicht. Dies ist insbesondere bei der oberhalb beschriebenen Weiterbildung zum Bestimmen der Strom-Stellgröße der Fall. Der Grenzwert für die Strom-Stellgröße kann dabei ja nach Anwendung und je nach gewünschter Empfindlichkeit gewählt werden.

Gemäß einer Weiterbildung weist das Gerät eine Steuereinheit auf, durch die der Strom-Sollwert bereitgestellt wird. Bildet das Gerät beispielsweise ein Messgerät, so wird durch die Steuereinheit jeweils entsprechend einem, in dem Gerät erfassten Messwert der Strom-Sollwert bestimmt und bereitgestellt. Gemäß einer Weiterbildung wird durch die Steuereinheit des Gerätes bei Erhalt von einem Alarmsignal, durch das angezeigt wird, dass durch das Strom-Stellglied ein nicht dem Strom-Sollwert entsprechend hoher Stromwert einstellbar ist, ein Niedrig-Strom-Sollwert bereitgestellt. Auf diese Weise wird dann der Schritt B) eingeleitet. Solch ein Alarmsignal kann die Steuereinheit insbesondere im Normalbetrieb (vergleiche Schritt A)) oder in dem Hoch-Stromwert-Betrieb (vergleiche C)) erhalten. Gemäß einer Weiterbildung werden durch die Steuereinheit auch die nach dem Bereitstellen des Niedrig-Strom-Sollwertes durchzuführenden Schritte durchgeführt beziehungsweise eingeleitet. Dies sind insbesondere das Speichern eines auszugebenden Messwertes beziehungsweise Stellwertes in dem Gerät, das Überprüfen des Gerätes auf das Vorliegen eines internen Fehlers, und/oder das Überprüfen der Stromeinstellungs-Funktionsfähigkeit (Schritt C)).

Gemäß einer Weiterbildung werden Alarmsignale, die dadurch bedingt sind, dass durch das Strom-Stellglied nur kurzzeitig ein nicht dem Strom-Sollwert entsprechend hoher Stromwert einstellbar war, verworfen und nicht durch die Steuereinheit bearbeitet. Denn insbesondere bei hohen Stromänderungen innerhalb kurzer Zeit kann eine vorrübergehende Abweichung zwischen Strom-Sollwert und tatsächlich eingestelltem Stromwert auftreten, die dann zu einem kurzzeitigen Überschreiten der Strom-Stellgröße über den vorbestimmten Grenzwert führt. Dennoch ist in solchen Fällen eine Stromeinstellungs-Funktionsfähigkeit gegeben und eine Unterbrechung des Normalbetriebs des Gerätes ist nicht erforderlich. Unter einer "kurzzeitigen" Nicht-Einstellbarkeit eines, dem Strom-Sollwert entsprechend hohen Stromwertes wird dabei insbesondere ein Zustand verstanden, bei dem ein zur Beurteilung der Stromeinstellungs-Funktionsfähigkeit herangezogenes Kriterium, wie beispielsweise die Strom-Stellgröße, nur kürzer als eine vorbestimmte Zeitdauer eine vorgegebene Bedingung für das Nichtvorliegen der Stromeinstellungs-Funktionsfähigkeit erfüllt.

Grundsätzlich kann das Verwerfen beziehungsweise Unterdrücken von Alarmsignalen bei einer nur kurzzeitigen Nicht-Einstellbarkeit des Stromwertes auf unterschiedliche Weise und auch an unterschiedlichen Stellen des Signalpfades des Alarmsignals erfolgen. Insbesondere kann vorgesehen sein, dass zwischen dem Erzeuger des Alarmsignals (zum Beispiel dem Vergleichsglied) und der Steuereinheit oder alternativ in der Steuereinheit im Bereich des Eingangs des Alarmsignals ein digitaler Filter, insbesondere ein digitaler Integrator-Filter, vorgesehen ist, durch den kurzzeitige Alarmsignale aus dem Signalpfad ausgefiltert werden. Ein digitaler Integrator-Filter bildet insbesondere einen EMV-Filter (EMV: Elektromagnetische Verträglichkeit), durch den elektromagnetische Störungen ausgefiltert werden.

Gemäß einer Weiterbildung wird das Gerät über den analogen Stromausgang mit Strom versorgt. Insbesondere wird das Gerät durch ein 2-Leiter-Gerät gebildet. Weiterhin ist, wie oberhalb erläutert wird, das Gerät vorzugsweise als Messgerät ausgebildet.

Die vorliegende Erfindung betrifft ferner ein Gerät, insbesondere ein Messgerät oder eine übergeordnete Steuerungseinheit, welches/welche einen analogen Stromausgang zur Ausgabe eines einem Messwert oder einem Stellwert des Gerätes entsprechenden Stromwertes, ein dem Stromausgang zugeordnetes Strom-Stellglied, durch das in Abhängigkeit von einem Strom-Sollwert eine Einstellung des Stromwertes an dem Stromausgang vornehmbar ist, eine Steuereinheit, durch die der Strom-Sollwert bereitstellbar ist, und eine Strom-Überwachungseinheit, die in Signalverbindung mit der Steuereinheit steht und durch die überwachbar ist, ob durch das Strom-Stellglied ein dem Strom-Sollwert entsprechend hoher Stromwert an dem Stromausgang eingestellt wird, aufweist. Dabei liegt der einen Messwert beziehungsweise einen Stellwert darstellende Stromwert innerhalb eines Bereichs von einem unteren Strom-Grenzwert bis zu einem oberen Strom-Grenzwert. Weiterhin ist die Steuereinheit derart ausgebildet, dass in einem Normalbetrieb des Gerätes der Strom-Sollwert entsprechend einem über den analogen Stromausgang auszugebenden Messwert beziehungsweise Stellwert bereitgestellt wird und dass in dem Fall, in dem durch die Strom-Überwachunaseinheit an die Steuereinheit signalisiert wird, in dem durch die Strom-Überwachungseinheit an die Steuereinheit signalisiert wird, dass durch das Strom-Stellglied ein dem Strom-Sollwert entsprechend hoher Stromwert nicht einstellbar ist, durch die Steuereinheit ein Niedrig-Strom-Sollwert unterhalb des unteren Strom-Grenzwertes bereitgestellt wird. Ferner sind die Steuereinheit und die Strom-Überwachungseinheit derart ausgebildet, dass nach Bereitstellen des Niedrig-Strom-Sollwertes zur Überprüfung der Stromeinstellungs-Funktionsfähigkeit die Steuereinheit einen Hoch-Strom-Sollwert oberhalb des oberen Strom-Grenzwertes bereitstellt und dass durch die Strom-Überwachungseinheit überwacht wird, ob durch das Strom-Stellglied ein dem Hoch-Strom-Sollwert ensprechend hoher Stromwert an dem Stromausgang einstellbar ist.

Durch das erfindungsgemäße Gerät, das insbesondere als Messgerät ausgebildet sein kann, werden in entsprechender Weise die oberhalb in Bezug auf das erfindungsgemäße Verfahren erläuterten Vorteile erzielt. Ferner sind die oberhalb erläuterten Weiterbildungen und Varianten entsprechend realisierbar. Die oberhalb erläuterten Verfahrensschritte sind dabei insbesondere, je nach Ausgestaltung des betreffenden Schrittes, durch die Steuereinheit des Gerätes und/oder durch eine entsprechend ausgebildete Schaltung durchführbar. Die Steuereinheit kann dabei insbesondere durch einen entsprechend eingerichteten Prozessor, wie beispielsweise einen Mikroprozessor, gebildet werden. Die in der Steuereinheit auszuführenden Schritte können aber auch teilweise oder vollständig in einem ASIC (engl.: application specific integrated circuit; deutsch: Anwendungsspezifische Integrierte Schaltung), einem CPLD (engl.: complex programmable logic device; deutsch: Komplexes Programmierbares Logikgerät), und/oder in einem FPGA (engl.: Field Programmable Gate Array; deutsch: frei programmierbare logische Anordnung) implementiert sein.

Gemäß einer Weiterbildung wird das Gerät durch ein 2-Leiter-Messgerät, durch das eine physikalische und/oder chemische Messgröße erfassbar ist, gebildet und das 2-Leiter-Messgerät ist über den analogen Stromausgang mit Strom versorgbar. Solche 2-Leiter-Messgeräte, die gleichzeitig über den analogen Stromausgang mit Strom versorgbar sind, werden häufig eingesetzt. Bei diesen 2-Leiter-Messgeräten ist das Risiko einer unzureichenden Spannungsversorgung in der 2-Leiter-Stromschleife und einem damit verbundenen Ausfall der Stromeinstellungs-Funktionsfähigkeit relativ hoch, so dass die vorliegende Erfindung bei solchen 2-Leiter-Messgeräten besonders vorteilhaft ist. Die durch das 2-Leiter-Messgerät erfassbare, physikalische und/oder chemische Messgröße kann insbesondere durch eine Temperatur, einen Druck, einen Durchfluss, einen Füllstand, einen PH-Wert, etc. gebildet werden.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:
- Fig. 1:: eine schematische Darstellung eines 2-Leiter-Messgerätes gemäß einer Ausführungsform der vorliegenden Erfindung, das an einer 2-Leiter-Stromschleife angeschlossen ist; und
- Fig. 2:: ein Flussdiagramm zur Veranschaulichung einer Ausführungsform des erfindungsgemäßen Verfahrens.

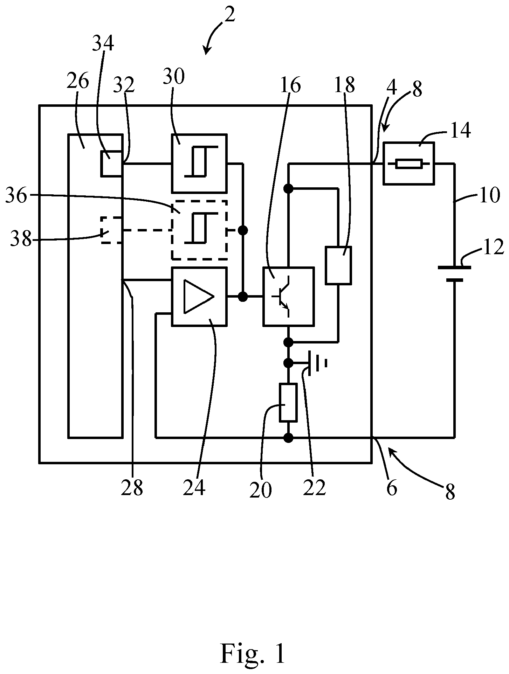

In Fig. 1 ist ein 2-Leiter-Messgerät 2 gemäß einer Ausführungsform der vorliegenden Erfindung dargestellt. Das 2-Leiter-Messgerät 2 weist einen, durch zwei elektrische Anschlüsse 4, 6 gebildeten, analogen Stromausgang 8 auf. Über diesen analogen Stromausgang 8 ist das 2-Leiter-Messgerät 2 mit elektrischer Leistung versorgbar. Dazu wird es, wie in Fig. 1 dargestellt ist, mit den zwei elektrischen Anschlüssen 4, 6 an eine 2-Leiter-Stromschleife 10 angeschlossen. An der 2-Leiter-Stromschleife 10 ist ein Netzteil 12 zur Versorgung des 2-Leiter-Messgerätes 2 mit elektrischer Leistung angeschlossen. Die weiteren Lasten, die neben dem 2-Leiter-Messgerät 2 an der 2-Leiter-Stromschleife 10 hängen, sind in Fig. 1 schematisch durch einen Widerstand 14 dargestellt.

Das 2-Leiter-Messgerät 2 ist derart ausgebildet, dass es im Einsatz über den analogen Stromausgang 8 einen Stromwert, der einem in dem 2-Leiter-Messgerät 2 erfassten Messwert entspricht, ausgibt. Eine übergeordnete Steuerungseinheit, die einen Empfänger für das über die 2-Leiter-Stromschleife 10 übermittelte Stromsignal des 2-Leiter-Messgerätes 10 bildet und die an der 2-Leiter-Stromschleife 10 angeschlossen sein kann, ist in Fig. 1 nicht dargestellt. Zur Einstellung des Stromwertes in der 2-Leiter-Stromschleife 10 ist intern in dem 2-Leiter-Messgerät 2 ein Strom-Stellglied 16 vorgesehen, das dem analogen Stromausgang 8 zugeordnet ist und über welches die 2-Leiter-Stromschleife 10 im Einsatz (innerhalb des 2-Leiter-Messgerätes 2) geschlossen wird. Das Strom-Stellglied 16 wird in der vorliegenden Ausführungsform durch einen Transistor gebildet. Parallel zu dem Strom-Stellglied 16 ist intern in dem 2-Leiter-Messgerät 2 ein Messgerät-Netzteil 18 an der 2-Leiter-Stromschleife 10 angeschlossen, das über die 2-Leiter-Stromschleife 10 mit elektrischer Leistung versorgt wird und das wiederum zur Versorgung des 2-Leiter-Messgerätes 2 mit elektrischer Leistung dient. In Serie zu dem Strom-Stellglied 16 und dem Messgerät-Netzteil 18 ist ein zur Strommessung in der 2-Leiter-Stromschleife 10 eingesetzter Widerstand 20 an der 2-Leiter-Stromschleife 10 angeschlossen. Der Widerstand 20 liegt bei der dargestellten Ausführungsform auf der einen Seite an Masse 22 an. Die andere Seite des Widerstandes 20 ist an dem invertierenden (bzw. negativen) Eingang eines Operationsverstärkers 24, der zum Einstellen des Stromwertes in der 2-Leiter-Stromschleife 10 eingesetzt wird und dessen Funktion unterhalb erläutert wird, angeschlossen. Auf diese Weise wird dem invertierenden Eingang des Operationsverstärkers 24 ein Spannungswert, der charakteristisch für den tatsächlichen Strom in der 2-Leiter-Stromschleife 10 ist, zugeführt.

Das 2-Leiter-Messgerät 2 weist ferner eine als Mikroprozessor ausgebildete Steuereinheit 26 auf. Durch die Steuereinheit 26 wird in einem Normalbetrieb basierend auf einem Messwert, der von einem (nicht dargestellten) Sensor des 2-Leiter-Messgerätes 2 erfasst wurde, ein entsprechender, den Messwert darstellender Stromwert bestimmt. Der den Messwert darstellende Stromwert wird durch ein Stromsignal gemäß dem 4-20 mA Standard gebildet. Dies bedeutet, dass der einen Messwert darstellende Stromwert innerhalb eines Bereichs von dem unteren Strom-Grenzwert von 4 mA bis zu dem oberen Strom-Grenzwert von 20 mA liegt. Der durch die Steuereinheit 26 bestimmte Stromwert wird als Strom-Sollwert (z.B. in Form einer entsprechenden Spannung) von der Steuereinheit 26 bereitgestellt, was in Fig. 1 durch den Ausgang 28 der Steuereinheit 26 dargestellt ist. Der Strom-Sollwert (bzw. die entsprechende Spannung) wird dem nicht-invertierenden (positiven) Eingang des Operationsverstärkers 24 zugeführt. Die Steuereinheit 26 ist ferner derart ausgebildet, dass sie auch einen Strom-Sollwert unterhalb des unteren Strom-Grenzwertes oder einen Strom-Sollwert oberhalb des oberen Strom-Grenzwertes bereitstellen kann. Solche Stromwerte werden bei der vorliegenden Ausführungsform zur Signalisierung eines Alarms bzw. Fehlers, wie beispielsweise eines Sensorausfalls, etc., verwendet, wobei die Betriebsweise bei Einstellung solch eines Stromwertes nicht mehr als "Normalbetrieb" bezeichnet wird. Bei der vorliegenden Ausführungsform wird mit einem Stromwert von weniger als 4 mA, insbesondere mit einem Stromwert von weniger als 3,5 mA, eine unzureichende Spannungsversorgung in der 2-Leiter-Stromschleife 10 signalisiert.

Im Normalbetrieb wird in dem Operationsverstärker 24 basierend auf der Differenz des nicht invertierenden Eingangs und des invertierenden Eingangs des Operationsverstärkers 24 eine Strom-Stellgröße ausgegeben. Der nicht invertierende Eingang entspricht dabei dem Strom-Sollwert und der invertierende Eingang entspricht dem tatsächlich an dem analogen Stromausgang 8 eingestellten Stromwert. Bei der vorliegenden Ausführungsform werden die Eingänge und der Ausgang des Operationsverstärkers 24 jeweils durch Spannungssignale gebildet. Die Strom-Stellgröße wird dem Strom-Stellglied 16, insbesondere der Basis des Transistors, zugeführt, das basierend auf der Strom-Stellgröße den Strom in der 2-Leiter-Stromschleife 10 einstellt.

Zur Überwachung, ob ein durch das Strom-Stellglied 16 an dem analogen Stromausgang 8 eingestellter Stromwert entsprechend hoch ist wie ein durch die Steuereinheit 26 bereitgestellter Strom-Sollwert, weist das 2-Leiter-Messgerät 2 ein durch einen Komparator 30 gebildetes Vergleichsglied auf. Der Komparator 30 kann dabei, wie aus dem Fachgebiet bekannt ist, beispielsweise durch einen entsprechend betriebenen Operationsverstärker gebildet werden. Der Eingang des Komparators 30 ist an dem Ausgang des Operationsverstärkers 24 angeschlossen. Dem Eingang des Komparators 30 wird folglich die Strom-Stellgröße zugeführt. Die Strom-Stellgröße nimmt bei der vorliegenden Ausgestaltung der Schaltung dann einen hohen Wert ein, wenn der tatsächlich eingestellte Stromwert nicht einen, dem Strom-Sollwert entsprechend hohen Wert, insbesondere nicht über eine längere Zeitdauer, erreicht. In Abhängigkeit von der konkreten Ausbildung der Schaltung und in Abhängigkeit von einer gewünschten Empfindlichkeit (die je nach Anwendung variieren kann) kann folglich ein Grenzwert bestimmt werden, bei dessen Überschreiten durch die Strom-Stellgröße davon ausgegangen wird, dass ein dem Strom-Sollwert entsprechend hoher Stromwert nicht einstellbar ist. In dem Komparator 30 wird ein Überschreiten dieses Grenzwertes durch die Strom-Stellgröße überwacht. Wird der Grenzwert durch die Strom-Stellgröße überschritten, so wird dies der Steuereinheit 26 durch den Komparator 30 signalisiert. Insbesondere wird bei der vorliegenden Ausführungsform ein entsprechendes Spannungssignal als Alarmsignal an einen Eingang 32 der Steuereinheit aeaeben. Ein Überschreiten kann beispielsweise dadurch signalisiert werden, dass der Ausgang des Komparators 30 von einer unteren Versorgungsspannung des Komparators 30 auf eine obere Versorgungsspannung des Komparators 30 (oder umgekehrt) wechselt.

Im Normalbetrieb können auch bei Vorliegen der Stromeinstellungs-Funktionsfähigkeit kurzzeitige Überschreitungen des Grenzwertes durch die Strom-Stellgröße auftreten. Dies kann insbesondere dann, wenn hohe Stromänderungen innerhalb kurzer Zeit einzustellen sind, auftreten. Um keine unnötige Unterbrechung des Normalbetriebs durch solche kurzzeitigen Überschreitungen des Grenzwertes auszulösen, weist die Steuereinheit im Bereich des Eingangs 32, an dem der Ausgang des Komparators 30 anliegt, einen digitalen Integrator-Filter 34 auf. Durch den digitalen Integrator-Filter 34 werden elektromagnetische Störungen, insbesondere kurzzeitige (beispielsweise kürzer als eine vorbestimmte Zeitdauer) Alarmsignale des Komparators 30, ausgefiltert.

In entsprechender Weise, wie durch den Komparator 30 eine Überschreitung eines oberen Grenzwertes durch die Strom-Stellgröße überwacht wird, kann, wie in Fig. 1 in gestrichelter Linie dargestellt ist, auch durch einen weiteren Komparator 36 und durch einen, diesem Komparator 36 zugeordneten, digitalen Integrator-Filter 38 die Unterschreitung eines unteren Grenzwertes durch die Strom-Stellgröße überwacht werden, falls solch eine Überwachung zusätzlich gewünscht wird. Der Eingang des Komparators 36 ist an dem Ausgang des Operationsverstärkers 24 angeschlossen. Ferner ist der Komparator 36 parallel zu dem Komparator 30 angeschlossen. Durch Überwachen, ob die Strom-Stellgröße einen unteren Grenzwert unterschreitet, kann ein Zustand festgestellt werden, in dem ein nicht dem Strom-Sollwert entsprechend niedriger Stromwert in der 2-Leiter-Stromschleife 10 einstellbar ist. Dieser Fehler kann beispielsweise dann auftreten, wenn in dem 2-Leiter-Messgerät 2 ein (ungewünschter) Stromfluss zwischen den beiden elektrischen Anschlüssen 4, 6 an dem Strom-Stellglied 16 vorbei auftritt.

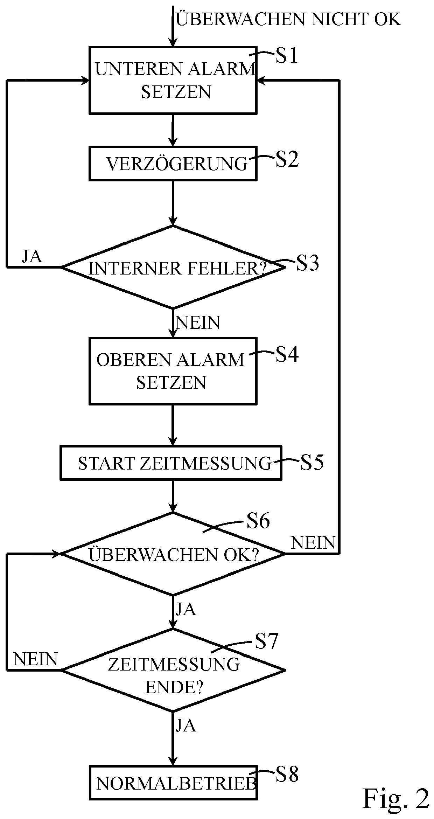

Nachfolgend wird eine Ausführungsform des erfindungsgemäßen Verfahrens unter zusätzlicher Bezugnahme auf Fig. 2 erläutert. In dem 2-Leiter-Messgerät 2 wird im Normalbetrieb (d.h. während der Einstellung eines, einem Messwert entsprechenden Stromwertes an dem analogen Stromausgang 8) überwacht, ob durch das Strom-Stellglied 16 ein dem Strom-Sollwert entsprechend hoher Stromwert an dem analogen Stromausgang 8 eingestellt wird. Die Überwachung wird dabei, wie oberhalb erläutert wird, insbesondere unter Einsatz des Komparators 30, des digitalen Integrator-Filters 34 und der Steuereinheit 26 durchgeführt.

Vorliegend wurde beispielsweise ein (nicht dargestelltes) Handbediengerät (z.B. ein HART®-Handheld) mit einem hohen Kommunikationswiderstand zum Parametrieren des 2-Leiter-Messgerätes 2 an die 2-Leiter-Stromschleife 10 angeschlossen. Dies führt zu einem zusätzlichen Spannungsabfall an dem Kommunikationswiderstand des Handbediengerätes. Aufgrund dieses zusätzlichen Spannungsabfalls ist die Spannungsversorgung in der 2-Leiter-Stromschleife 10 durch das Netzteil 12, das für eine so hohe Last nicht ausgelegt ist, unzureichend, so dass durch das Strom-Stellalied 16 ein dem Strom-Sollwert entsprechend hoher Stromwert nicht mehr einstellbar ist.

Dies wird bei dem Schritt des Überwachens in dem 2-Leiter-Messgerät 2 im Normalbetrieb festgestellt. Der Komparator 30 gibt dementsprechend ein Alarmsignal an die Steuereinheit 26 aus. Es handelt sich vorliegend nicht nur um eine kurzzeitige Nicht-Einstellbarkeit des Stromwertes. Folglich wird das entsprechend lange andauernde Alarmsignal nicht durch den digitalen Integrator-Filter 34 ausgefiltert und wird durch die Steuereinheit 26 bearbeitet (vgl. "ÜBERWACHEN NICHT OK" in Fig. 2). Die Steuereinheit 26 stellt daraufhin einen Niedrig-Strom-Sollwert unterhalb des unteren Strom-Grenzwertes, beispielsweise einen Niedrig-Strom-Sollwert von 3 mA, bereit. Das Strom-Stellglied 16 nimmt dann eine Einstellung des Stromwertes an dem analogen Stromausgang 8 entsprechend diesem Niedrig-Strom-Sollwert vor (vgl. "UNTEREN ALARM SETZEN" in Schritt S1 in Fig. 2). Solch eine Einstellung ist in der Regel auch bei unzureichender Spannungsversorgung innerhalb der 2-Leiter-Stromschleife 10 möglich. Sind wie in dem vorliegenden Fall die Probleme beim Einstellen des Stromwertes durch eine unzureichende Spannungsversorgung innerhalb der 2-Leiter-Stromschleife 10 bedingt, so wird durch die Einstellung eines solch niedrigen Stromes der Spannungsabfall außerhalb des 2-Leiter-Messgerätes 2 reduziert. Damit wird wiederum die Spannungsversorgung des 2-Leiter-Messgerätes 2 stabilisiert. Auf diese Weise kann ein Geräteabsturz des 2-Leiter-Messgerätes 2 verhindert werden. Ferner wird auf diese Weise eine Alarmmeldung an eine, an der 2-Leiter-Stromschleife 10 angeschlossene, (nicht dargestellte) übergeordnete Steuerungseinheit ausgegeben. Durch die Alarmmeldung wird signalisiert, dass in dem 2-Leiter-Messgerät 2 Probleme beim Einstellen des Stromwertes aufgetreten sind.

Nach dem Schritt des Bereitstellens eines Niedrig-Strom-Sollwertes durch die Steuereinheit 26 wird eine zweite, vorbestimmte Zeitdauer, insbesondere eine Zeitdauer von einigen 100 ms (Millisekunden) gewartet (vgl. "VERZÖGERUNG" in Schritt S2 in Fig. 2). Währenddessen kann sich das 2-Leiter-Messgerät 2 stabilisieren. Ferner werden währenddessen Messwerte, die in dem 2-Leiter-Messgerät 2 erfasst werden, (in einem Speicher des 2-Leiter-Messgerätes 2) gespeichert, um einen Datenverlust zu verhindern. Weiterhin wird während der vorbestimmten, zweiten Zeitdauer intern in dem 2-Leiter-Messgerät 2 überprüft, ob ein interner Fehler des 2-Leiter-Messgerätes vorliegt (vgl. "INTERNER FEHLER" in Schritt S3 in Fig. 2). Liegt intern in dem 2-Leiter-Messgerät 2 ein Fehler vor, so ist eine Überprüfung der Stromeinstellungs-Funktionsfähigkeit in dem 2-Leiter-Messgerät nicht sinnvoll, da davon auszugehen ist, dass in diesem Fall die Wiederherstellung des Normalbetriebs nicht möglich ist. Dementsprechend wird in dem Fall, dass ein interner Fehler in dem 2-Leiter-Messgerät 2 festgestellt wird ("JA" nach Schritt S3 in Fig. 2), weiterhin der Niedrig-Strom-Sollwert durch die Steuereinheit 26 bereitgestellt (vgl. Schritt S1 in Fig. 2). Kann dagegen kein interner Fehler in dem 2-Leiter-Messgerät 2 festgestellt werden (vgl. "NEIN" nach Schritt S3 in Fig. 2), was bei dem vorliegenden Beispiel der Fall ist, so wird nach Ablauf der zweiten, vorbestimmten Zeitdauer der Schritt des Überprüfens der Stromeinstellungs-Funktionsfähigkeit begonnen. Hierzu wird durch die Steuereinheit 26 ein Hoch-Strom-Sollwert oberhalb des oberen Strom-Grenzwertes bereitgestellt (vgl. "OBEREN ALARM SETZEN" in Schritt S4 in Fig. 2). Gleichzeitig wird die Zeitmessung gestartet (vgl. "START ZEITMESSUNG" in Schritt S5 in Fig. 2). In dem 2-Leiter-Messgerät 2 wird in diesem Hoch-Stromwert-Betrieb überwacht, ob durch das Strom-Stellalied 16 ein dem Hoch-Strom-Sollwert entsprechend hoher Stromwert an dem analogen Stromausgang 8 einstellbar ist (vgl. "ÜBERWA-CHEN OK?" in Schritt S6 in Fig. 2). Ist dies nicht der Fall (vgl. "NEIN" nach Schritt S6 in Fig. 2, wird durch die Steuereinheit 26 anschließend wieder ein Niedrig-Strom-Sollwert unterhalb des unteren Strom-Grenzwertes, beispielsweise ein Niedrig-Strom-Sollwert von 3 mA, bereitgestellt. Bei dem vorliegenden Beispiel ist dies solange der Fall, wie das Handbediengerät an der 2-Leiter-Stromschleife 10 angeschlossen ist. Währenddessen werden die Schritte S1 bis S6, gegebenenfalls auch in mehreren Iterationen, durchlaufen.

Das Vorliegen der Stromeinstellungs-Funktionsfähigkeit wird nur dann bejaht, wenn über die erste, vorbestimmte Zeitdauer hinweg ein dem Hoch-Strom-Sollwert entsprechend hoher Stromwert einstellbar ist. Der Ablauf der ersten, vorbestimmten Zeitdauer wird dabei durch die Zeitmessung erfasst (vgl. "ZEITMESSUNG ENDE?" in Schritt S7 in Fig. 2). Solange die erste, vorbestimmte Zeitdauer noch nicht abgelaufen ist (vgl. "NEIN" nach Schritt S7 in Fig. 2), wird die Überwachung fortgesetzt. Ist das Ergebnis der Überwachung nach Ablauf der ersten, vorbestimmten Zeitdauer immer noch in Ordnung (vgl. "JA" nach Schritt S7 in Fig. 2), so wird das 2-Leiter-Messgerät wieder in dem Normalbetrieb betrieben (vgl. "NORMALBETRIEB" in Schritt S8 in Fig. 2). Dies ist bei dem vorliegenden Beispiel dann der Fall, wenn das Handbediengerät von der 2-Leiter-Stromschleife 10 getrennt wurde und dementsprechend während der ersten, vorbestimmten Zeitdauer (der betreffenden Iteration) die Spannungsversorgung innerhalb der 2-Leiter-Stromschleife 10 wieder ausreichend war. In dem Normalbetrieb wird dann durch die Steuereinheit 26 ein Strom-Sollwert entsprechend einem, über den analogen Stromausgang 8 auszugebenden Messwert bereitgestellt.

Die vorliegende Erfindung ist nicht auf das unter Bezugnahme auf die Figuren erläuterte Ausführungsbeispiel beschränkt. Insbesondere kann das erfindungsgemäße Verfahren schaltungstechnisch auch auf andere Art und Weise umgesetzt werden. Das Überwachen, ob ein dem Strom-Sollwert entsprechend hoher Stromwert eingestellt wird, muss nicht zwingend durch Auswerten der Strom-Stellgröße erfolgen. Vielmehr kann auch eine andere Größe ausgewertet werden oder die Strom-Stellgröße kann auf andere Art und Weise erzeugt werden.

## Patentansprüche

1. Verfahren zur Überprüfung der Stromeinstellungs-Funktionsfähigkeit eines Gerätes (2), das
einen analogen Stromausgang (8) zur Ausgabe eines einem Messwert oder einem Stellwert des Gerätes entsprechenden Stromwertes, und
ein dem Stromausgang (8) zugeordnetes Strom-Stellglied (16), das in Abhängigkeit von einem, in dem Gerät (2) bereitgestellten Strom-Sollwert eine Einstellung des Stromwertes an dem Stromausgang (8) vornimmt, aufweist, wobei der einen Messwert bzw. einen Stellwert darstellende Stromwert innerhalb eines Bereichs von einem unteren Strom-Grenzwert bis zu einem oberen Strom-Grenzwert liegt
und wobei in einem Normalbetrieb des Gerätes (2) der Strom-Sollwert entsprechend einem über den analogen Stromausgang (8) auszugebenden Messwert bzw. Stellwert bereitgestellt wird,
aufweisend nachfolgende, in dem Gerät (2) durchgeführte Schritte:
A) Überwachen in dem Gerät (2) im Normalbetrieb, ob durch das Strom-Stellglied (16) ein dem Strom-Sollwert entsprechend hoher Stromwert an dem Stromausgang (8) eingestellt wird;
B) Bereitstellen eines Niedrig-Strom-Sollwertes unterhalb des unteren Strom-Grenzwertes, falls der Schritt des Überwachens im Normalbetrieb ergibt, dass durch das Strom-Stellglied (16) ein dem Strom-Sollwert entsprechend hoher Stromwert nicht einstellbar ist; **dadurch gekennzeichnet, dass** das Verfahren den folgenden Schritt umfasst:
C) Anschließendes Überprüfen der Stromeinstellungs-Funktionsfähigkeit durch Bereitstellen eines Hoch-Strom-Sollwertes oberhalb des oberen Strom-Grenzwertes und durch Überwachen in dem Gerät (2) in dem Hoch-Stromwert-Betrieb, ob durch das Strom-Stellglied (16) ein dem Hoch-Strom-Sollwert entsprechend hoher Stromwert an dem Stromausgang (8) einstellbar ist,
wobei in dem Fall des Vorliegens der Stromeinstellungs-Funktionsfähigkeit anschließend in dem Gerät (2) ein Strom-Sollwert entsprechend einem über den analogen Stromausgang (8) auszugebenden Messwert bzw. Stellwert bereitgestellt wird und
wobei in dem Fall, dass die Stromeinstellungs-Funktionsfähigkeit nicht vorliegt, anschließend in dem Gerät (2) ein Niedrig-Strom-Sollwert unterhalb des unteren Strom-Grenzwertes bereitgestellt wird.

2. Verfahren gemäß Anspruch 1, **dadurch gekennzeichnet, dass** bei dem Schritt des Überprüfens überprüft wird, ob durch das Strom-Stellglied (16) ein dem Hoch-Strom-Sollwert entsprechend hoher Stromwert über eine erste vorbestimmte Zeitdauer hinweg einstellbar ist.

3. Verfahren gemäß einem der vorangehenden Ansprüche, **dadurch gekennzeichnet, dass** nach dem Schritt des Bereitstellens eines Niedrig-Strom-Sollwertes eine zweite, vorbestimmte Zeitdauer abgewartet wird, bevor der Schritt des Überprüfens der Stromeinstellungs-Funktionsfähigkeit begonnen wird.

4. Verfahren gemäß Anspruch 3, **dadurch gekennzeichnet, dass** während der zweiten, vorbestimmten Zeitdauer mindestens einer der nachfolgenden Schritte ausgeführt wird:
a) Speichern eines auszugebenden Messwertes bzw. Stellwertes in dem Gerät (2); und/oder
b) Überprüfen des Gerätes (2) auf das Vorliegen eines internen Fehlers.

5. Verfahren gemäß Anspruch 4, **dadurch gekennzeichnet, dass** der Schritt des Überprüfens der Stromeinstellungs-Funktionsfähigkeit nur dann durchgeführt wird, wenn der Schritt des Überprüfens des Gerätes (2) ergeben hat, dass kein interner Fehler in dem Gerät (2) vorliegt.

6. Verfahren gemäß einem der vorangehenden Ansprüche, **dadurch gekennzeichnet, dass** der einen Messwert bzw. einen Stellwert darstellende Stromwert durch ein Stromsignal gemäß dem 4-20 mA Standard gebildet wird.

7. Verfahren gemäß einem der vorangehenden Ansprüche, **dadurch gekennzeichnet, dass** in dem Gerät (2), insbesondere in einem Operationsverstärker (24) des Gerätes (2), der Strom-Sollwert mit einem an dem analogen Stromausgang (8) eingestellten Stromwert verglichen wird und basierend darauf eine, an das Strom-Stellglied (16) ausgegebene Strom-Stellgröße bestimmt wird.

8. Verfahren gemäß Anspruch 7, **dadurch gekennzeichnet, dass** das Gerät (2) ein Vergleichsglied, insbesondere einen Komparator (30), aufweist, durch das/den bestimmt wird, ob die Strom-Stellgröße einen vorbestimmten Grenzwert überschreitet, und durch das/den bei Überschreiten des Grenzwertes ein entsprechendes Alarmsignal an eine Steuereinheit (26) des Gerätes (2) ausgegeben wird.

9. Verfahren gemäß einem der vorangehenden Ansprüche, **dadurch gekennzeichnet, dass** das Gerät (2) eine Steuereinheit (26) aufweist, durch die der Strom-Sollwert bereitgestellt wird und durch die bei Erhalt von einem Alarmsignal, durch das angezeigt wird, dass durch das Strom-Stellglied (16) ein nicht dem Strom-Sollwert entsprechend hoher Stromwert einstellbar ist, ein Niedrig-Strom-Sollwert bereitgestellt wird.

10. Verfahren gemäß Anspruch 8 oder 9, **dadurch gekennzeichnet, dass** Alarmsignale, die dadurch bedingt sind, dass durch das Strom-Stellglied (16) nur kurzzeitig ein nicht dem Strom-Sollwert entsprechend hoher Stromwert einstellbar war, verworfen und nicht durch die Steuereinheit (26) bearbeitet werden.

11. Verfahren gemäß einem der vorangehenden Ansprüche, **dadurch gekennzeichnet, dass** das Gerät (2) über den analogen Stromausgang (8) mit Strom versorgt wird, insbesondere dass das Gerät (2) durch ein 2-Leiter-Gerät gebildet wird.

12. Gerät, welches aufweist:
einen analogen Stromausgang (8) zur Ausgabe eines einem Messwert oder einem Stellwert des Gerätes (2) entsprechenden Stromwertes,
ein dem Stromausgang (8) zugeordnetes Strom-Stellglied (16), durch das in Abhängigkeit von einem Strom-Sollwert eine Einstellung des Stromwertes an dem Stromausgang (8) vornehmbar ist,
eine Steuereinheit (26), durch die der Strom-Sollwert bereitstellbar ist, und eine Strom-Überwachungseinheit (30, 34), die in Signalverbindung mit der Steuereinheit (26) steht und durch die überwachbar ist, ob durch das Strom-Stellglied (16) ein dem Strom-Sollwert entsprechend hoher Stromwert an dem Stromausgang (8) eingestellt wird,
wobei der einen Messwert bzw. einen Stellwert darstellende Stromwert innerhalb eines Bereichs von einem unteren Strom-Grenzwert bis zu einem oberen Strom-Grenzwert liegt und wobei die Steuereinheit (26) derart ausgebildet ist, dass in einem Normalbetrieb des Gerätes (2) der Strom-Sollwert entsprechend einem über den analogen Stromausgang (8) auszugebenden Messwert bzw. Stellwert bereitgestellt wird und dass in dem Fall, in dem durch die Strom-Überwachungseinheit (30, 34) an die Steuereinheit (26) signalisiert wird, dass durch das Strom-Stellglied (16) ein dem Strom-Sollwert entsprechend hoher Stromwert nicht einstellbar ist, durch die Steuereinheit (26) ein Niedrig-Strom-Sollwert unterhalb des unteren Strom-Grenzwertes bereitgestellt wird, **dadurch gekennzeichnet, dass** die Steuereinheit (26) und die Strom-Überwachungseinheit (30, 34) derart ausgebildet sind, dass nach Bereitstellen des Niedrig-Strom-Sollwertes zur Überprüfung der Stromeinstellungs-Funktionsfähigkeit die Steuereinheit (26) einen Hoch-Strom-Sollwert oberhalb des oberen Strom-Grenzwertes bereitstellt und dass durch die Strom-Überwachungseinheit (30, 34) überwacht wird, ob durch das Strom-Stellglied (16) ein dem Hoch-Strom-Sollwert entsprechend hoher Stromwert an dem Stromausgang (8) einstellbar ist, und
wobei die Steuereinheit (26) und die Strom-Überwachungseinheit (30, 34) derart ausgebildet sind, dass in dem Fall des Vorliegens der Stromeinstellungs-Funktionsfähigkeit anschließend in dem Gerät (2) ein Strom-Sollwert entsprechend einem über den analogen Stromausgang (8) auszugebenden Messwert bzw. Stellwert bereitgestellt wird und dass in dem Fall, dass die Stromeinstellungs-Funktionsfähigkeit nicht vorliegt, anschließend in dem Gerät (2) ein Niedrig-Strom-Sollwert unterhalb des unteren Strom-Grenzwertes bereitgestellt wird.

13. Gerät gemäß Anspruch 12, **dadurch gekennzeichnet, dass** das Gerät durch ein 2-Leiter-Messgerät (2), durch das eine physikalische und/oder chemische Messgröße erfassbar ist, gebildet wird und dass das 2-Leiter-Messgerät (2) über den analogen Stromausgang (8) mit Strom versorgbar ist.

## Claims

1. Procedure designed for the verification of the current setting functionality of a device (2), which has an analog current output (8) designed for a current value corresponding to a measured value or an actuating value of the device, and a current actuator (16) assigned to the current output (8), said actuator setting the current value at the current output (8) depending on a current target value provided in the device (2),
wherein the current value representing a measured value or an actuating value is located within a range from a lower current limit value to an upper current limit value
and wherein, during the normal operation of the device (2), the current target value is provided according to a measured value or an actuating value to be output via the analog current output (8),
said procedure comprising the following steps, which are performed in the device (2):
A) During normal mode, monitoring in the device to determine whether the current actuator (16) sets a high current value at the current output (8) corresponding to the current target value;
B) Provision of a low current target value below the lower current limit value if the result of the step involving monitoring during normal operation is that a high current value corresponding to the current target value cannot be set by the current actuator (16);
**characterized in that the procedure comprises the following step:**
C) Final verification of the current setting functionality through the provision of a high current target value above the upper current limit value and through monitoring in the device (2), in the high current mode, whether a high current value corresponding to the high current target value can be set at the current output (8) by the current actuator (16),
wherein, if the device has a functional capacity to set the current, a current target value is provided in the device that corresponds to a measured value or actuating value to be output via the analog current output (8), and
wherein, if the device does not have a functional capacity to set the current, a low current target value below the lower current limit value is then provided in the device (2).

2. Procedure as claimed in Claim 1, **characterized in that** during the verification step a check is performed to determine whether a high current value, corresponding to the high current target value, can be set by the current actuator (16) over a first predefined period of time.

3. Procedure as claimed in one of the previous claims, **characterized in that** after the step involving the provision of a low current target value, a second predefined period of time must elapse before the step involving the verification of the current setting functionality is started.

4. Procedure as claimed in Claim 3, **characterized in that** at least one of the following steps is performed during the second predefined period of time:
a) A measured value or an actuating value to be output is saved in the device (2); and/or
b) The device (2) is checked to determine if an internal error has occurred.

5. Procedure as claimed in Claim 4, **characterized in that** the step involving the verification of the current setting functionality is only performed if the step involving the checking of the device (2) found that there is no internal error in the device (2).

6. Procedure as claimed in one of the previous claims, **characterized in that** the current value representing a measured value or an actuating value is formed by a current signal in accordance with the 4-20 mA Standard.

7. Procedure as claimed in one of the previous claims, **characterized in that** in the device (2), particularly in an operational amplifier (24) of the device (2), the current target value is compared with a current value regulated at the analog current output (8), and, on the basis of this comparison, a current manipulated variable is output to the current actuator (16).

8. Procedure as claimed in Claim 7, **characterized in that** the device (2) has a comparison unit, particularly a comparator (30), by means of which it is determined whether the current manipulated variable exceeds a predefined limit value, and a corresponding alarm signal is output to a control unit (26) of the device (2) if the limit value is exceeded.

9. Procedure as claimed in one of the previous claims, **characterized in that** the device (2) comprises a control unit (26) via which the current target value is provided and via which a low current target value is provided if an alarm signal is received that indicates that a high current value which does not correspond to the current target value can be set by the current actuator (16).

10. Procedure as claimed in Claim 8 or 9, **characterized in that** alarm signals - which are caused by the fact that the current actuator (16) was only briefly able to set a high current value not corresponding to the current target value - are rejected and are not processed by the control unit (26).

11. Procedure as claimed in one of the previous claims, **characterized in that** the device (2) is powered via the analog current output (8), particularly **in that** the device (2) is formed by a 2-wire device.

12. Device having:
an analog current output (8) for outputting a current value corresponding to a measured value or an actuating value of the device (2),
a current actuator (16) assigned to the current output (8) by means of which a setting of the current value can be made at the current output (8), depending on a current target value,
a control unit (26), by means of which the current target value can be made available, and a current monitoring unit (30, 34), which has a signaling connection with the control unit (26) and which makes it possible to monitor whether a high current value, corresponding to the current target value, is set by the current actuator (16) at the current output (8),
wherein the current value representing a measured value or an actuating value is located in a range from a low current limit value to a high current limit value, and
wherein the control unit (26) is designed in such a way that the current target value corresponding to a measured value or an actuating value to be output via the analog current output (8) is provided during the normal operation of the device (2), and in such a way that if the current monitoring unit (30 34) signals to the control unit (26) that a high current value corresponding to the current target value cannot be set by the current actuator (16), a low current target value below the lower current target value is provided by the control unit (26),
**characterized in that:**
the control unit (26) and the current monitoring unit (30, 34) are designed in such a way that the control unit (26) provides a high current target value above the upper current limit value following the provision of the low current target value for the purpose of verifying the current setting functionality, and that the current monitoring unit (30, 34) monitors whether a high current value, corresponding to the high current target value, can be set at the current output (8), and that the control unit (26) and the monitoring unit (30, 34) are designed in such a way that, if the current setting functionality of the device is confirmed, a current target value corresponding to a measured value or actuating value to be output via the analog current output (8) is provided in the device (2), and that if the current setting functionality of the device is not confirmed, a low current target value below the lower current target value is provided in the device (2).

13. Device as claimed in Claim 12, **characterized in that** the device is formed by a 2-wire measuring device (2), by means of which a physical and/or chemical measured variable can be measured, and **in that** the 2-wire measuring device (2) can be powered via the analog current output (8).

## Revendications

1. Procédé destiné à la vérification de la capacité de fonctionnement du dispositif de réglage de courant d'un appareil (2), lequel dispositif comporte une sortie de courant analogique (8) destinée à la sortie d'une valeur de courant correspondant à une valeur mesurée ou une valeur de réglage de l'appareil, et un organe de réglage du courant (16) attribué à la sortie courant (8), lequel organe effectue un réglage de la valeur de courant sur la sortie courant (8) en fonction d'une valeur de consigne de courant mise à disposition dans l'appareil (2),
procédé pour lequel la valeur de courant représentant une valeur mesurée ou une valeur de réglage se situe dans une gamme comprise entre une valeur limite de courant inférieure et une valeur limite de courant supérieure et pour lequel, dans un mode de fonctionnement normal de l'appareil (2), la valeur de consigne de courant est mise à disposition en fonction d'une valeur de mesure ou d'une valeur de réglage à émettre via la sortie courant analogique (8),
lequel procédé comprend les étapes suivantes, exécutées dans l'appareil (2) :
A) Surveillance dans l'appareil, en mode de fonctionnement normal, en vue de vérifier si l'organe de réglage de courant (16) règle une valeur de courant correspondant à la valeur de consigne de courant ;
B) Mise à disposition d'une valeur de consigne de courant basse, inférieure à la valeur seuil inférieure du courant, au cas où l'étape de surveillance donne comme résultat, en mode de fonctionnement normal, qu'une valeur de courant correspondant à la valeur de consigne de courant ne peut pas être réglée ;
**caractérisé en ce que** :
C) Vérification consécutive de la capacité de fonctionnement du dispositif de réglage de courant par la mise à disposition d'une valeur de consigne de courant haute, supérieure à la valeur seuil de courant supérieure, et par la surveillance dans l'appareil (2), en mode valeur de courant haute, en vue de vérifier si une valeur de courant haute correspondant à la valeur de consigne de courant haute peut être réglée sur la sortie courant (8) par l'organe de réglage de courant (16), étape pour laquelle, dans le cas où la capacité de fonctionnement du dispositif de réglage de courant est assurée, une valeur de consigne de courant est ensuite mise à disposition dans l'appareil (2) en fonction d'une valeur de mesure ou d'une valeur de réglage à émettre via la sortie courant analogique (8), et
étape pour laquelle, dans le cas où la capacité de fonctionnement du dispositif de réglage de courant n'est pas assurée, une valeur de courant de consigne basse, laquelle est inférieure à la valeur seuil de courant inférieur, est ensuite mise à disposition dans l'appareil (2).

2. Procédé selon la revendication 1, **caractérisé en ce que**, lors de l'étape de la vérification, on vérifie si une valeur de courant haute, correspondant à la valeur de consigne de courant haute, peut être réglée au moyen de l'organe de réglage de courant (16) sur une première durée prédéfinie.

3. Procédé selon l'une des revendications précédentes, **caractérisé en ce qu'**après l'étape de mise à disposition d'une valeur de consigne de courant basse, on attend une deuxième durée prédéfinie avant de commencer avec l'étape de vérification de la capacité de fonctionnement du dispositif de réglage de courant.

4. Procédé selon la revendication 3, **caractérisé en ce que**, pendant la deuxième durée prédéfinie, au moins l'une des étapes suivantes est exécutée :
a) Enregistrement d'une valeur de mesure ou d'une valeur de réglage à émettre dans l'appareil (2) ; et/ou
b) Vérification de l'appareil (2) par rapport à la présence d'une erreur interne.

5. Procédé selon la revendication 4, **caractérisé en ce que** l'étape de vérification de la capacité de fonctionnement du réglage de courant n'est effectuée que lorsque l'étape de vérification de l'appareil (2) a donné comme résultat qu'aucune erreur interne n'est présente dans l'appareil (2).

6. Procédé selon l'une des revendications précédentes, **caractérisé en ce que** la valeur de courant représentant une valeur de mesure ou une valeur de réglage est formée par un signal de courant conformément à la norme 4-20 mA.

7. Procédé selon l'une des revendications précédentes, **caractérisé en ce qu'**est comparée, dans l'appareil (2), notamment dans un amplificateur opérationnel (24) de l'appareil (2), la valeur de consigne de courant avec une valeur de courant réglée sur la sortie courant analogique (8), et **en ce qu'**est
déterminée, sur la base de cette comparaison, une grandeur de réglage de courant émise à l'organe de réglage de courant (16).

8. Procédé selon la revendication 7, **caractérisé en ce que** l'appareil (2) comporte un organe de comparaison, notamment un comparateur (30), à travers lequel l'on détermine si la grandeur de réglage de courant dépasse une valeur seuil prédéfinie, et à travers lequel un signal d'alarme correspondant est envoyé à une unité de commande (26) de l'appareil (2) en cas de dépassement de la valeur seuil.

9. Procédé selon l'une des revendications précédentes, **caractérisé en ce que** l'appareil (2) comprend une unité de commande (26), par l'intermédiaire de laquelle la valeur de consigne de courant est mise à disposition et par l'intermédiaire de laquelle une valeur de consigne de courant basse est mise à disposition en cas de réception d'un signal d'alarme indiquant que l'organe de réglage de courant (16) est réglable à une valeur de courant ne correspondant pas à la valeur de consigne de courant.

10. Procédé selon la revendication 8 ou 9, **caractérisé en ce que** des signaux d'alarme - provoqués par le fait qu'une valeur de courant qui ne correspond pas à la valeur de consigne de courant n'était réglable que brièvement par l'organe de réglage de courant (16) - sont rejetés et ne sont pas traités par l'unité de commande (26).

11. Procédé selon l'une des revendications précédentes, **caractérisé en ce que** l'appareil (2) est alimenté en courant par l'intermédiaire de la sortie courant analogique (8), notamment **en ce que** l'appareil (2) est constitué d'un appareil 2 fils.

12. Appareil comportant :
une sortie courant analogique (8) destinée à l'émission d'une valeur de courant correspondant à une valeur de mesure ou une valeur de réglage de l'appareil (2), un organe de réglage du courant (16) attribué à la sortie courant (8), lequel organe permet de procéder, en fonction d'une valeur de consigne de courant, à un réglage de la valeur de courant sur la sortie courant (8),
une unité de commande (26), laquelle permet de mettre à disposition la valeur de consigne de courant, et une unité de surveillance de courant (30, 34), qui est en liaison de signalisation avec l'unité de commande (26) et qui permet de surveiller si une valeur de courant haute peut être réglée en fonction de la valeur de consigne de courant sur la sortie courant par l'intermédiaire de l'organe de réglage de courant (16),
la valeur de courant représentant une valeur de mesure ou une valeur de réglage située à l'intérieur d'une gamme allant d'une valeur seuil de courant inférieure à une valeur seuil de courant supérieure, et l'unité de commande (26) étant conçue de telle sorte que, dans un mode de fonctionnement normal de l'appareil (2), la valeur de consigne de courant est mise à disposition en fonction d'une valeur de mesure ou d'une valeur de réglage à émettre via la sortie de courant analogique (8), et de telle sorte que dans le cas où l'unité de surveillance de courant (30, 34) signale à l'unité de commande (26) le fait qu'une valeur de courant haute ne peut pas être réglée en fonction de la valeur de consigne de courant, une valeur de consigne de courant basse, inférieure à la valeur seuil inférieure de courant, est mise à disposition par l'organe de réglage de courant (16),
**caractérisé** :
**en ce que** l'unité de commande (26) et l'unité de surveillance de courant (30,34) sont conçues de telle sorte qu'après la mise à disposition de la valeur de consigne de courant basse en vue de la vérification de la capacité de fonctionnement du dispositif de réglage de courant, l'unité de commande (26) met à disposition une valeur de consigne de courant haute, supérieure à la valeur seuil de courant supérieure, et
**en ce que** l'unité de surveillance de courant (30, 34) surveille si une valeur de courant haute, correspondant à la valeur de consigne de courant haute, peut être réglée sur la sortie courant (8), et
**en ce que** l'unité de commande (26) et l'unité de surveillance (30, 34) sont conçues de telle sorte, dans le cas où la capacité de fonctionnement du dispositif de réglage de courant est assurée, à mettre ensuite à disposition une valeur de consigne de courant dans l'appareil (2) en fonction d'une valeur de mesure ou d'une valeur de réglage à émettre via la sortie courant analogique (8), et de telle sorte, dans le cas où la capacité de fonctionnement du dispositif de réglage de courant n'est pas assurée, à mettre ensuite à disposition dans l'appareil (2) une valeur de courant de consigne basse, laquelle est inférieure à la valeur seuil de courant inférieur.

13. Appareil selon la revendication 12, **caractérisé en ce que** l'appareil est constitué d'un appareil de mesure 2 fils (2), qui permet de mesurer une grandeur physique et/ou chimique, et **en ce que** l'appareil de mesure 2 fils (2) peut être alimenté par l'intermédiaire de la sortie courant analogique (8).
